# EUROPEAN PATENT APPLICATION

(11) **EP 2 391 134 A1**
(43) Date of publication of application: **30.11.2011**
(21) Application number: 10163938.3
(22) Date of filing: 26.05.2010
(51) Int. Cl.: H04N 13/00

(54) **A video display system, a shutter glasses device and a method for operating shutter glasses**

(71) Applicant: Advanced Digital Broadcast S.A., 1292 Chambesy (CH)
(72) Inventor: Paczkowski, Jacek, 65-119, Poland (PL); Blonski, Pawel, 65-119, Poland (PL)
(74) Representative: Pawlowski, Adam

(57) **Abstract**

A video display system, comprising a video signal source (110) configured to receive a plurality of video signals comprising video frames, a display controller (120) configured to display the video frames of the video signals such that the video frames of at least one video signal are alternated with the video frames of at least one other video signal, at least one pair of shutter glasses (150) configured to be driven by a synchronization signal, a shutter glasses synchronizer (140) configured to synchronize the operation of the shutter glasses (150) with the display of the video frames of the video signals via synchronization signals, wherein the shutter glasses synchronizer (140) is configured to transmit a synchronization signal for each displayed video signal on a separate synchronization channel, and at least one of the shutter glasses (150) comprises a synchronization channel selector (153) configured to receive the synchronization signal via a synchronization channel and to change the synchronization channel via which to receive the synchronization signal.

## Description

### Description

The invention relates to a video display system capable of presenting a plurality of video signals on a single display screen.

Watching television or other video signals often generates a conflict of interest, when each of a plurality of viewers in front of a display screen wishes to watch a different video. A typical solution to divide the screen into a plurality of regions and display a separate video in each region requires a display screen of a large size and is not satisfactory for viewers, as the viewers are distracted by the other video signals.

A US patent application No. US2007/0263003 "Screen sharing method and apparatus" presents an apparatus for providing video feeds to at least two viewers using a common display, wherein each viewer uses an individual shuttered filter and the apparatus comprises a control unit operable to control the display to alternately display an image from a first video feed and an image from a second video feed and to synchronize the first shuttered filter to the display such that the first filter is shuttered when the second video feed image is displayed and to synchronize the second shuttered filter to the display such that the second filter is shuttered when the first video feed image is displayed. Thereby, only the first video feed image is provided to the first viewer using the first shuttered filter and only the second vieo feed image is provided to the second viewer using the second shuttered filter. The shuttered filters may have a form of typical LCD shutter glasses. While the document concentrates on the synchronization between the displayed images and the shuttered filters, it does not specify how the individual users may select the image to be displayed.

A common method for controlling the image to be displayed on a display is to use a remote controller. In particular, in case of television signal, the remote controller may enable selection of a particular channel to be viewed by the user. In case of multiple video signals displayed by a single display, a sophisticated remote controller could be provided to be operable by all users, or a separate remote controller could be dedicated to each pair of shutter glasses. Some users might want to share their experience of watching a particular video with the other users. In case of television programs, this would require the user to communicate the channel number of the watched program to the other users, who could use their remote controllers to change the video channel, which can be complicated in case the receiver has a large number of channels or the particular channel is a less known one.

The aim of the present invention is to provide a system for displaying multiple video feeds which facilitates sharing the viewing experience between users of the system.

The object of the invention is a video display system, comprising a video signal source configured to receive a plurality of video signals comprising video frames, a display controller configured to display the video frames of the video signals such that the video frames of at least one video signal are alternated with the video frames of at least one other video signal, at least one pair of shutter glasses configured to be driven by a synchronization signal, a shutter glasses synchronizer configured to synchronize the operation of the shutter glasses with the display of the video frames of the video signals via synchronization signals, wherein the shutter glasses synchronizer is configured to transmit a synchronization signal for each displayed video signal on a separate synchronization channel, and wherein at least one of the shutter glasses comprises a synchronization channel selector configured to receive the synchronization signal via a synchronization channel and to change the synchronization channel via which to receive the synchronization signal.

The system may comprise at least two pairs of shutter glasses configured to be driven by individual synchronization signals transmitted on separate synchronization channels, wherein at least one of the shutter glasses may comprise a synchronization channel selector configured to change the synchronization channel to a channel via which a synchronization signal is received by another pair of shutter glasses.

The video signals can be mono video signals and/or stereoscopic video signals.

The shutter glasses synchronizer may comprise a timing synchronizer configured to generate synchronization signals for each video signal based on individual parameters of the video signal.

At least one synchronization signal can be scrambled and at least one of the shutter glasses may comprise a synchronization channel selector configured to descramble the synchronization signal.

At least one of the shutter glasses may comprise a signal source controller configured to configure parameters of the video signal to be displayed for the particular pair of shutter glasses.

The signal source controller can be controllable by the user via a user interface embedded within the frame of the shutter glasses.

The synchronization channel may further comprise an identifier of the video signal and/or an identifier of a pair of shutter glasses.

Another object of the invention is a shutter glasses device, comprising a controller configured to drive a left shutter glass and a right shutter glass responsively to a synchronization signal, and a synchronization channel selector, configured to receive the synchronization signal via one of a plurality of synchronization channels and to change the synchronization channel via which the synchronization signal is received.

The device may further comprise a user interface embedded within the frame of the shutter glasses for controlling the synchronization channel selector.

The device may further comprise an embedded display configured to display additional information received in the synchronization channel.

The object of the invention is also a method for operating shutter glasses comprising the steps of driving a left shutter glass and a right shutter glass responsively to a synchronization signal, receiving the synchronization signal via one of a plurality of synchronization channels, and in response to a user request, changing the synchronization channel via which the synchronization signal is received.

The method may further comprise the step of upon activation of the shutter glasses, sending a video feed start request to a display controller, the video feed start request comprising an identifier of a video signal.

The method may further comprise the step of upon deactivation of the shutter glasses, sending a video feed stop request to a display controller, the video feed stop request comprising an identifier of the shutter glasses.

The method may further comprise the steps of receiving a descrambling key, descrambling the data received via the synchronization channel using the descrambling key.

The invention will be described with reference to a drawing, in which:
Fig. 1 shows the structure of the system according to the invention;
Fig. 2 shows the concept of alternate display of video frames and synchronization channels;
Fig. 3 shows a procedure of operation of a video display controller;
Fig. 4 shows a procedure of operation of a shutter glasses synchronizer;
Fig. 5 shows a procedure of operation of shutter glasses; and
Fig. 6 shows exemplary shutter glasses.

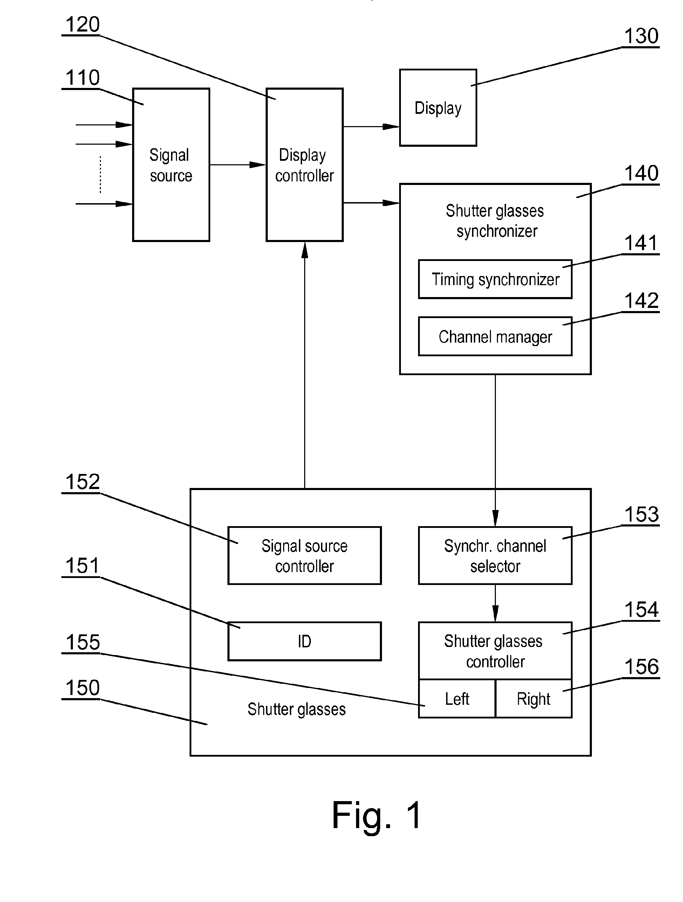

Fig. 1 shows the structure of the system according to the invention. The system comprises a video signal source 110 configured to receive a plurality of video signals from one or more devices. The devices may be stand-alone devices, such as a DVD player, a television set-top box, a game console, or electronic components of the system, such as a computer video card, a satellite, cable or terrestrial television tuner, a network card. In the simplest embodiment, the video signal source 110 may be a data input port configured to receive a plurality of video signals.

Each video signal comprises video frames, which when displayed at a sufficient frame rate, e.g. 24 or 30 frames per second, provide a motion picture experience to the user watching the frames displayed consecutively one after another. The video signals can be mono signals or stereoscopic signals, comprising alternating left and right frames, to be viewed by the left or right eye of the user watching the signal.

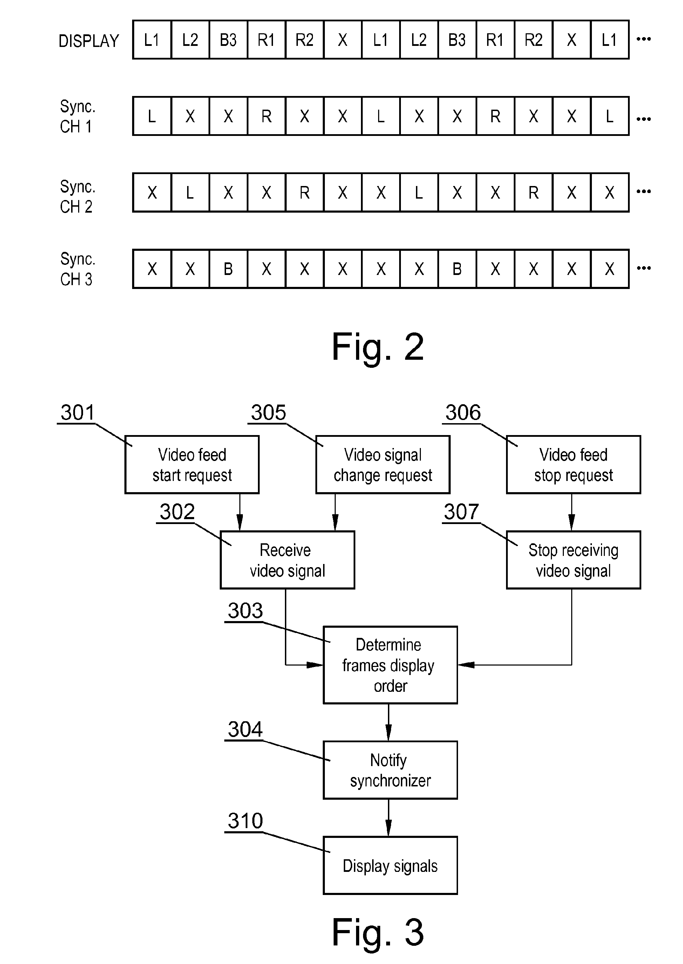

The frames are displayed on a display 130 with a display screen, capable of displaying preferably more than 30 frames per second, for example 100 or 200 frames per second. The display 130 receives a signal to be displayed from a display controller 120, which is configured to display the video frames of the video signals such that the video frames of at least one video signal are alternated with the video frames of at least one other video signal, as shown on Fig. 2.

The video signals are to be watched by the users of the system via shutter glasses 150, each configured to be driven by a synchronization signal. The synchronization signal defines the opening and closing time of the left and right glass, such as to show a particular frame to the left and right eye of the user. The synchronization signals are generated by a shutter glasses synchronizer 140, configured to synchronize the operation of the shutter glasses 150 with the display of the video frames. A timing synchronizer 141 is used to calculate the exact timing at which opening and closing signals are to be transmitted to the shutter glasses, taking into account such parameters as the parameters of the video signal (brightness, amount of change between consecutive frames), parameters of the display screen (frame display delay), parameters of the shutter glasses (opening and closing delay, synchronization signal processing time) and/or parameters of the transmission channel (synchronization signal transmission speed, channel delay). A synchronization channel manager 142 is used to establish a separate synchronization channel for each synchronization signal.

A synchronization signal for each video signal is transmitted by the synchronizer 140 on a separate synchronization channel, as indicated on Fig. 2. The synchronization channels may be established over a wired or wireless medium. They may be proprietary channels, accessible only to a specific type of shutter glasses. Alternatively, the channels may be established in a standardized manner, for example according to Bluetooth or 802.11-type standards. Each channel may be freely accessible to all devices or may comprise scrambled data. Scrambling may be performed by using any known algorithm allowing data descrambling upon entering a descrambling key. The descrambling key may be a simple numerical sequence to be entered by the user via the shutter glasses. In this way, each user may allow access to the video feeds established by the user only to other users who know the descrambling key. This allows parental control of certain video feeds or sharing feeds only between members of the same team in multiplayer video games.

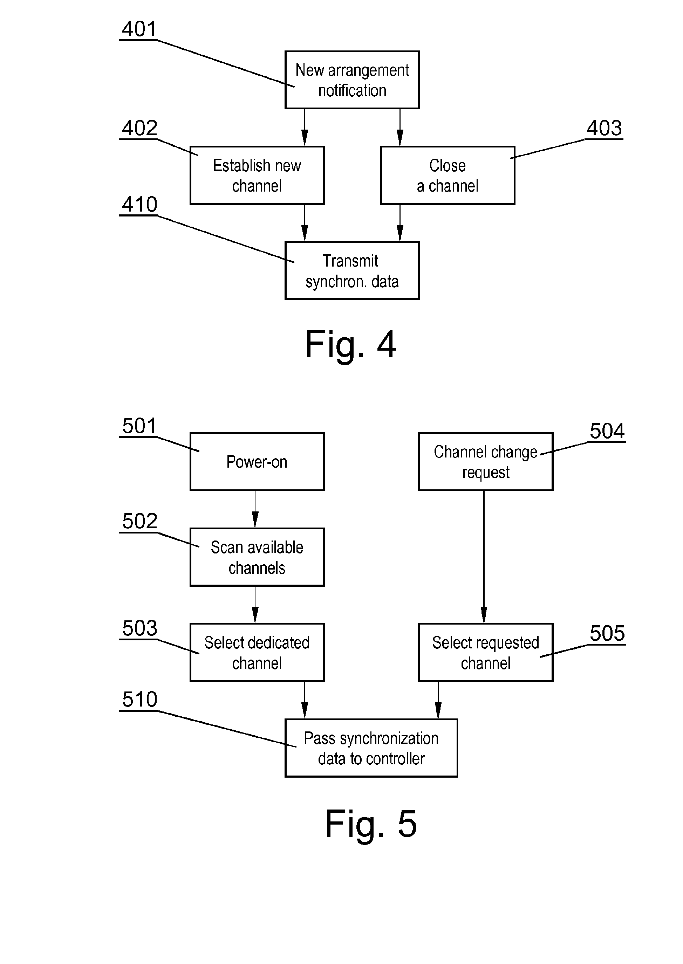

At least one of the shutter glasses 150 is configured to change the synchronization channel via which to receive the synchronization signal. The manner in which the shutter glasses 150 according to the invention can change the synchronization channel is described in more details with reference to Fig. 5.

Each of the shutter glasses 150 can have a unique identifier 151 assigned, which can be used to identify the particular pair of shutter glasses 150 in communication with the synchronizer 140, the controller 120 and/or other shutter glasses 150.

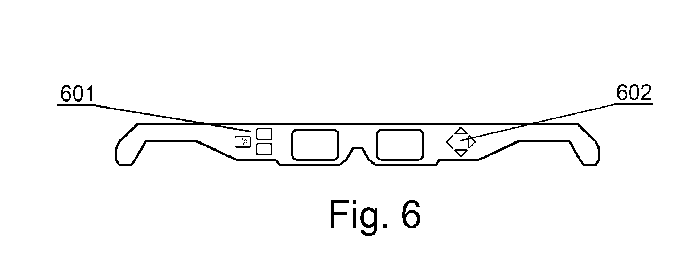

A signal source controller 152 is used to configure the parameters of the signal to be displayed for the particular pair of shutter glasses 150, such as signal input (selection of signal source, such a tv/dvd/game console), signal source identifier (such as a tv channel number), video signal parameters (such as brightness, contrast). The signal source controller 152 can be integrated with the shutter glasses as shown in Fig. 6, for example may have a form of a plurality of buttons located at the frame, a separate controller or a common controller shared by a plurality of users. The signal source controller 152 sends signal source control messages to the display controller, the messages comprising a shutter glasses identifier 151 and a command to start or close a video feed or one more of the above-mentioned parameters of the signal to be displayed. The signal source control messages are received and processed by the display controller according to the procedure shown in Fig. 3.

A synchronization channels selector 153 is used to select appropriate channel transmitting synchronization data on the video signal source the user wishes to view, which can be either a video signal associated with the particular pair of shutter glasses 150 or a video signal associated with another shutter pair of shutter glasses 150, selected by a channel change command. The channel change command is preferably entered by a button located at the frame of the glasses, as shown in Fig. 6. The synchronization channels selector 153 may be further configured to descramble the synchronization signals, by handling a descrambling algorithm operating with a descrambling key, entered e.g. via the buttons 601 or 602 of the shutter glasses.

Synchronization data received from the synchronization channel are transmitted to a shutter glasses controller 154, configured to operate the left shutter glass 155 and the right shutter glass 156.

The video display system according to the invention is therefore capable of displaying multiple video signals and facilitates sharing the viewing experience between users of the system by allowing the users to change the synchronization channel via which the shutter glasses receive the synchronization signals. Therefore, each user may easily check the signal watched by another user via simply changing the synchronization channel, without the need to know the video signal parameters (e.g. television channel number) of the signal watched by the other user. The system may thus facilitate sharing experience during watching television (to easily tune to another television channel watched by another user) or playing video games (to see the game from the perspective of other users). Furthermore, the system may be configured that the number of video signals displayed is higher than the number of shutter glasses. For example, a plurality of signals may be assigned to one user, such as a plurality of favorite channels which the user may easily change and share with other users, or in case of video games or interactive video feeds - a plurality of views from different perspective. In a simplest embodiment, the system can handle only one pair of shutter glasses and a plurality of video feeds.

Fig. 2 shows the concept of alternate display of video frames and synchronization channels. The line "DISPLAY" indicates the frames displayed on the display screen, wherein left video frames L1 and right video frames R1 of a first stereoscopic video signal S1 are alternated with left video frames L2 and right video frames R2 of a second stereoscopic video signal S2, which are alternated with mono video frames B3 of a third video mono signal S3, which are alternated with blank video frames X. The Blank video frames may be inserted between the video frames of the displayed video signals in order to provide uniform time difference between frames of the same category, so as to keep constant time difference between left and right video frames. The synchronization channel SCH1 comprises information on the opening of the left and right glass for the first video signal S1, wherein the left glass is open during display of L1 video frames and the right glass is open during display or R1 video frames. Similarly, the synchronization channel SCH2 comprises information on the opening of the left and right glass for the first video signal S2, wherein the left glass is open during display of L2 video frames and the right glass is open during display or R2 video frames. The synchronization channel SCH3 comprises information on the opening of both glasses for the third video signal S3, wherein both glasses are open during display of B3 video frames.

Fig. 3 presents a procedure of operation of a video display controller. In case a video feed start request is received in step 301, for example when a user turns on the shutter glasses, the video signal associated with the request is received in step 302 and the parameters of the video signal are read, such as whether the signal is mono or stereoscopic signal. Next, in step 303 the order of frames to be displayed is determined, i.e. how the frames are to be alternated with the frames of the other currently active video feeds. Next, in step 303 the shutters glasses synchronizer is notified on the new arrangement of the displayed video signals. The shutter glasses synchronizer may be also notified on the identifier of the video signal, such as the name of a television channel, and the identifier of the pair of shutter glasses requesting the video signal. The display controller proceeds to displaying the video signals with the new settings in step 310. The steps 302-304 are similarly performed upon receiving a request to change the displayed video signal in step 305. In case in step 306 a request to stop a video feed is received, for example when the user turns off the shutter glasses, the reception of the signal is stopped in step 307, for example including turning off a video tuner associated with the signal, and the controller proceeds to perform steps 303-304. In this way, a user may initiate simultaneous display of a plurality of video feeds, simply by pressing a "turn on" button of the shutter glasses to start display of the first video feed, and pressing the "turn on" button of the shutter glasses again to start display of the second video feed. Each of the video feeds can be stopped by pressing the "turn off' button while watching the feed. Alternatively, dedicated buttons may be provided to start and stop display of individual video feeds.

Fig. 4 shows a procedure of operation of a shutter glasses synchronizer. The synchronizer may receive in step 401 a notification from the display controller about new arrangement of displayed video signals. In case this notification includes data on a new video feed established, a new synchronization channel is established in step 402 by the synchronization channels manager 142 to transmit synchronization with the new video feed. The new synchronization channel may, apart from the shutter glasses driving signal, transmit identifier of the video signal and the identifier of the pair of shutter glasses requesting the video signal. The identifiers may be displayed by the shutter glasses which comprise embedded display 611. Next, in step 410 the shutter glasses synchronizer proceeds to transmitting shutter glasses synchronization data according to the arrangement of displayed video signals, using the timing synchronizer 141 to properly generate the data. In case the notification includes information that one of the video feeds is no longer displayed (or that information is derived by comparing the notification with the current configuration), the synchronization channel associated with the closed video feed is closed as well in step 403.

Fig. 5 shows a procedure of operation of shutter glasses synchronization channel selector 153. If the shutter glasses comprise embedded signal source controller 152, then on power-on of the glasses in step 501, the signal source controller 152 may send a video feed start request to the display controller 120, the request comprising an identifier of a video signal, which can identify a particular signal source, a video signal identifier such as a default identifier configured to let the display controller select a default signal, a particular television channel number, a video game player name, a multiview camera number etc. In case the signal source controller 152 is remote from the shutter glasses, it may have to be activated separately by the user, in order to send the video feed start request to select a signal to be displayed for the user of the particular pair of shutter glasses 150. A plurality of video feeds may be started by the same pair of shutter glasses 150, for example by pressing a "power on" button a number of times, wherein upon each "power on" a new video feed start request is sent to the display controller 120. The operation of the synchronization channel selector 153 may start with a scan of currently available synchronization channels in step 502 and selection of a channel transmitting an identifier dedicated to the particular pair of shutter glasses in step 503. Then, in step 510 the received synchronization data are passed to the shutter glasses controller 154 in order to appropriately display the video signal to which the particular channel synchronizes. In case a synchronization channel change request is received in step 504, which may be a next/previous channel request or a request for a particular channel, for example a channel associated with a user using a particular other pair of shutter glasses, the other channel is selected in step 505 and the glasses are appropriately synchronized in step 510. On power-off of the glasses, the signal source controller 152 may send a video feed stop request to the display controller 120, the video feed stop request comprising an identifier of the shutter glasses 150, in order to stop displaying one or more of video feeds requested by the particular pair of shutter glasses 150.

Fig. 6 shows exemplary shutter glasses according to the invention. The shutter glasses comprise, for example at one side of the frame, a user interface 601, e.g. in a form of a set of buttons, to control the synchronization channels selector 153, enabling activation of such commands as shutter glasses power-on or a next/previous synchronization channel. The shutter glasses may further comprise, for example at another side of the frame, a user interface 602, e.g. in a form of a set of buttons, to control the signal source controller 152, enabling activation of such commands as television channel change, volume control, brightness control, etc. Preferably, each button comprises a raised marking, such as an arrow or another symbol, which allows the user to identify the function of a particular button only by touching and without looking at it. Furthermore, the shutter glasses may comprise embedded display 611 configured to display additional information received in the synchronization channel data, such as video signal identifier and identifier of the pair of shutter glasses which requested the video signal. The embedded display 611 may be an additional LCD display applied over one or both LCD screens forming the shutter glasses or another type of display arranged next to the LCD screens forming the shutter glasses.

It can be easily recognised, by one skilled in the art, that the aforementioned system, device and method may be performed and/or controlled by one or more computer programs. Such computer programs are typically executed by utilizing the computing resources in a computing device such as personal computers, personal digital assistants, cellular telephones, receivers and decoders of digital television, processors embedded within the shutter glasses or the like. Applications are stored in non-volatile memory, for example a flash memory or volatile memory, for example RAM and are executed by a processor. These memories are exemplary recording media for storing computer programs comprising computer-executable instructions performing all the steps of the computer-implemented method according the technical concept presented herein.

The present invention may be implemented using any display, for example on computer monitor, a television display, a mobile phone, PDA, or a laptop computer, capable of displaying frames with a rate allowing simultaneous display of a plurality of video feeds.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein. Accordingly, the scope of protection is not limited to the preferred embodiments described in the specification, but is only limited by the claims that follow.

## Claims

1. A video display system, comprising:
- a video signal source (110) configured to receive a plurality of video signals comprising video frames,
- a display controller (120) configured to display the video frames of the video signals such that the video frames of at least one video signal are alternated with the video frames of at least one other video signal,
- at least one pair of shutter glasses (150) configured to be driven by a synchronization signal,
- a shutter glasses synchronizer (140) configured to synchronize the operation of the shutter glasses (150) with the display of the video frames of the video signals via synchronization signals,
**characterized in that**
- the shutter glasses synchronizer (140) is configured to transmit a synchronization signal for each displayed video signal on a separate synchronization channel, and
- at least one of the shutter glasses (150) comprises a synchronization channel selector (153) configured to receive the synchronization signal via a synchronization channel and to change the synchronization channel via which to receive the synchronization signal.

2. The video display system according to claim 1, comprising at least two pairs of shutter glasses (150) configured to be driven by individual synchronization signals transmitted on separate synchronization channels, wherein at least one of the shutter glasses (150) comprises a synchronization channel selector (153) configured to change the synchronization channel to a channel via which a synchronization signal is received by another pair of shutter glasses (150).

3. The video display system according to any of previous claims, wherein the video signals are mono video signals and/or stereoscopic video signals.

4. The video display system according to any of previous claims, wherein the shutter glasses synchronizer (140) comprises a timing synchronizer (141) configured to generate synchronization signals for each video signal based on individual parameters of the video signal.

5. The video display system according to any of previous claims, wherein at least one synchronization signal is scrambled and wherein at least one of the shutter glasses (150) comprises a synchronization channel selector (153) configured to descramble the synchronization signal.

6. The video display system according to any of previous claims, wherein at least one of the shutter glasses (150) comprises a signal source controller (152) configured to configure parameters of the video signal to be displayed for the particular pair of shutter glasses (150).

7. The video display system according to claim 6, wherein the signal source controller (152) is controllable by the user via a user interface (602) embedded within the frame of the shutter glasses (150).

8. The video display system according to any of previous claims, wherein the synchronization channel further comprises an identifier of the video signal and/or an identifier of a pair of shutter glasses (150).

9. A shutter glasses (150) device, comprising:
- a controller (154) configured to drive a left shutter glass (155) and a right shutter glass (156) responsively to a synchronization signal
**characterized in that** it further comprises
- a synchronization channel selector (153), configured to receive the synchronization signal via one of a plurality of synchronization channels and to change the synchronization channel via which the synchronization signal is received.

10. The shutter glasses (150) device according to claim 9, further comprising a user interface (601) embedded within the frame of the shutter glasses (150) for controlling the synchronization channel selector (153).

11. The shutter glasses (150) device according to claim 9 or 10, further comprising an embedded display (611) configured to display additional information received in the synchronization channel.

12. A method for operating shutter glasses (150) comprising the step of:
- driving a left shutter glass (155) and a right shutter glass (156) responsively to a synchronization signal,
**characterized in that** it further comprises the steps of
- receiving the synchronization signal via one of a plurality of synchronization channels, and
- in response to a user request, changing the synchronization channel via which the synchronization signal is received.

13. The method according to claim 12, further comprising the step of, upon activation of the shutter glasses (150), sending a video feed start request to a display controller (120), the video feed start request comprising an identifier of a video signal.

14. The method according to any of claims 12-13, further comprising the step of, upon deactivation of the shutter glasses (150), sending a video feed stop request to a display controller (120), the video feed stop request comprising an identifier of the shutter glasses (150).

15. The method according to any of claims 12-14, further comprising the steps of receiving a descrambling key and descrambling the data received via the synchronization channel using the descrambling key.
